(19) Europäisches Patentamt
European Patent Office
Office européen des brevets

(11) **EP 3 926 516 A1**

(12) **EUROPEAN PATENT APPLICATION**

(43) Date of publication:
**22.12.2021 Bulletin 2021/51**

(51) Int Cl.:
***G06F 40/45*** (2020.01) ***G06F 40/44*** (2020.01)

(21) Application number: **21163862.2**

(22) Date of filing: **22.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2020 CN 202010550588**

(71) Applicant: **Beijing Baidu Netcom Science and Technology Co., Ltd. Beijing 100085 (CN)**

(72) Inventors:
• **ZHANG, Ruiqing Beijing, Beijing 100085 (CN)**
• **ZHANG, Chuanqiang Beijing, Beijing 100085 (CN)**
• **LIU, Jiqiang Beijing, Beijing 100085 (CN)**
• **HE, Zhongjun Beijing, Beijing 100085 (CN)**
• **LI, Zhi Beijing, Beijing 100085 (CN)**
• **WU, Hua Beijing, Beijing 100085 (CN)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **FIELD-DEPENDENT MACHINE TRANSLATION MODEL TRAINING METHOD, APPARATUS, ELECTRONIC DEVICE AND STORAGE MEDIUM**

(57) The present disclosure provides a machine translation model training method, apparatus, electronic device, storage medium and computer program product, which relates to the technical field of natural language processing. A specific implementation solution is as follows: selecting, from parallel corpuses, a set of samples whose translation quality satisfies a preset requirement and which have universal-field features and/or target-field features, to constitute a first training sample set; selecting, from the parallel corpuses, a set of samples whose translation quality satisfies a preset requirement and which do not have universal-field features and target-field features, to constitute a second training sample set; training an encoder in the machine translation model in the target field, a discriminator configured in encoding layers of the encoder, and the encoder and a decoder in the machine translation model in the target field in turn with the first training sample set and second training sample set, respectively. The training method according to the present disclosure is time-saving and effort-saving, and may effectively improve the training efficiency of the machine translation model in the target field.

```
                                                    ┌─S101
┌──────────────────────────────────────────────┐
│ Select, from parallel corpuses, a set of       │
│ samples whose translation quality satisfies a  │
│ preset requirement and which have universal-   │
│ field features and/or target-field features,   │
│ to constitute a first training sample set      │
└──────────────────────────────────────────────┘
                      │
                      ▼                             ┌─S102
┌──────────────────────────────────────────────┐
│ Select, from the parallel corpuses, a set of   │
│ samples whose translation quality satisfies a  │
│ preset requirement and which do not have       │
│ universal-field features and target-field      │
│ features, to constitute a second training      │
│ sample set                                     │
└──────────────────────────────────────────────┘
                      │
                      ▼                             ┌─S103
┌──────────────────────────────────────────────┐
│ Train an encoder in the machine translation    │
│ model in the target field, a discriminator     │
│ configured in encoding layers of the encoder,  │
│ and the encoder and a decoder in the machine   │
│ translation model in the target field in turn  │
│ with the first training sample set and second  │
│ training sample set, respectively; the         │
│ discriminator being used to recognize fields   │
│ to which input samples during training belong  │
└──────────────────────────────────────────────┘
```

FIG.1

## Description

## Field of the Disclosure

The present disclosure relates to the technical field of computers, specifically to the technical field of natural language processing, and particularly to a machine translation model training method, apparatus, electronic device, storage medium and computer program product.

## Background of the Disclosure

In Natural Language Processing (NLP), a conventional machine translation model may be universally used for all fields to achieve translation of corpuses in the fields. Hence, such a machine translation model may be referred to as a universal-field machine translation model.

In practical application, when the universal-field machine translation model in is trained, bilingual training samples in all fields are collected for training. Furthermore, the collected bilingual training samples in all fields are universal, and are usually training samples that can be recognized in all fields to adapt for all fields. However, when the duly trained machine translation model is used to translate corpuses in a certain target field, machine translation model in the universal field, during training, never learns special corpuses in the target field so that the corpuses of the target field cannot be recognized, and therefore accurate translation cannot be achieved. To overcome the above technical problem, the conventional technology employs a supervised training method to collect manually-marked bilingual training samples in the target field, and then perform fine-tuned training on the machine translation model in the universal field, to obtain the machine translation model in the target field.

However, in the training of the machine translation model in the conventional target field, since there are less data in the target field and more manpower cost needs to be consumed to mark the bilingual training samples, the process of training the machine translation model in the target field is time-consuming and laborious and exhibits a low training efficiency.

## Summary of the Disclosure

To solve the above technical problems, the present disclosure provides a machine translation model training method, apparatus, electronic device, storage medium and computer program product.

According to an aspect, there is provided a method for training a machine translation model in a target field, wherein the method comprises:

selecting, from parallel corpuses, a set of samples whose translation quality satisfies a preset requirement and which have universal-field features and/or target-field features, to constitute a first training sample set;

selecting, from the parallel corpuses, a set of samples whose translation quality satisfies a preset requirement and which do not have universal-field features and target-field features, to constitute a second training sample set;

training an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

According to another aspect, there is provided an apparatus for training a machine translation model in a target field, wherein the apparatus comprises:

a first selecting module configured to select, from parallel corpuses, a set of samples whose translation quality satisfies a preset requirement and which have universal-field features and/or target-field features, to constitute a first training sample set;

a second selecting module configured to select, from the parallel corpuses, a set of samples whose translation quality satisfies a preset requirement and which do not have universal-field features and target-field features, to constitute a second training sample set;

a training module configured to train an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

According to a further aspect, there is provided an electronic device, comprising:

at least one processor; and
a memory communicatively connected with the at least one processor; wherein,
the memory stores instructions executable by the at least one processor, and the instructions are executed by the at least one processor to cause the at least one processor to implement the method stated above.

According to a further aspect of the present disclosure, there is provided a non-transitory computer-readable storage medium storing computer instructions therein, wherein the computer instructions are used to cause the computer to implement the method stated above.

According to a further aspect of the present disclosure, there is provided a computer program product comprising instructions which, when the program is executed by a computer, cause the computer to implement the method stated above.

According to the technical solutions of of the present disclosure, as compared with the method for training the machine translation model in the target field in the prior art, the method for training the machine translation model in the target field in the present embodiment is time-saving and effort-saving, and may effectively improve the training efficiency of the machine translation model in the target field. It is possible, with the training method of the present disclosure, to adaptively adjust the training of the machine translation model in the target field by referring to the distribution of the samples in the target field and the universal field, thereby effectively improving the accuracy of the machine translation model in the target field.

It is to be understood that the summary section is not intended to identify key or essential features of embodiments of the present disclosure, nor is it intended to be used to limit the scope of the present disclosure. Other features of the present disclosure will become easily comprehensible through the following description.

**Brief Description of Drawings**

The figures are intended to facilitate understanding the solutions, not to limit the present disclosure. In the figures,

FIG. 1 illustrates a schematic diagram of a first embodiment according to the present disclosure;
FIG. 2 illustrates a schematic diagram of a second embodiment according to the present disclosure;
FIG. 3 illustrates a training architecture diagram of a machine translation model in a target field according to the present embodiment;
FIG. 4 illustrates a schematic diagram showing sample probability distribution in the present embodiment;
FIG. 5 illustrates a schematic diagram of a third embodiment according to the present disclosure;
FIG. 6 illustrates a schematic diagram of a fourth embodiment according to the present disclosure;
FIG. 7 illustrates a block diagram of an electronic device for implementing a method for training a machine translation model in the target field according to embodiments of the present disclosure.

**Detailed Description of Preferred Embodiments**

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

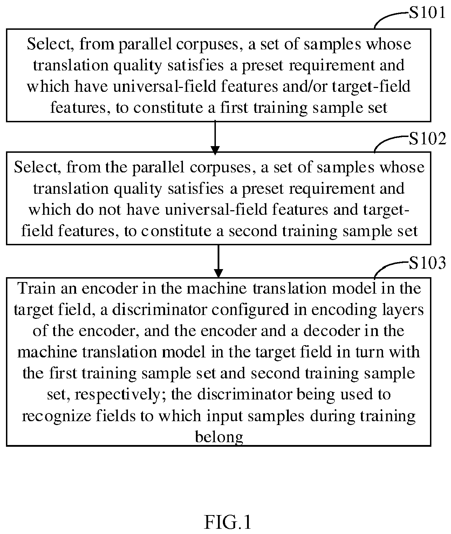

FIG. 1 illustrates a schematic diagram of a first embodiment according to the present disclosure; as shown in FIG. 1, a method of training a machine translation model in a target field according to the present embodiment may specifically include the following steps:

S101: Selecting, from parallel corpuses, a set of samples whose translation quality satisfies a preset requirement and which have universal-field features and/or target-field features, to constitute a first training sample set;

S102: Selecting, from the parallel corpuses, a set of samples whose translation quality satisfies a preset requirement and which do not have universal-field features and target-field features, to constitute a second training sample set;

S103: Training an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

A subject for executing the method of training a machine translation model in a target field according to the present embodiment is a training method of the machine translation model in the target field. The training method of the machine translation model in the target field may be an electronic entity similar to a computer, or may be an application integrated with software, the application, upon use, running on the computer device to implement the training of the machine translation model in the target field.

The parallel corpuses in the present embodiment may include several samples, each sample includes a source sentence and a target sentence, and the source sentence and the target sentence belong to different languages. Regarding any sample, when the machine translation model translates the source sentence in each sample into a target sentence, it simultaneously outputs a translation probability that the translation is the target sentence. The magnitude of the translation probability may characterize the quality of the translation. The larger the translation probability is, the higher the probability that the current machine translation model translates the source sentence x into y is, the better the translation quality is, or vice versa.

The universal field in the present embodiment means that a field is not specific or limited, and generally means all fields in NLP. The target field refers to a special field, for example, a colloquial field. For example, when the machine translation model in the universal field is trained, what are included in the parallel corpuses all are standard samples described in all fields, so what is learnt by the machine translation model in the universal field is a capability of translating standard corpuses. For example, a standard description is "Could you please tell me whether you have had dinner (请问您吃饭了没有)?", the machine translation model in the universal field can translate the corpus very well. However, expressions of corpuses are very brief in the colloquial field, for example, "Had dinner (吃了么)?". At this time, the machine translation model in the universal field might never learnt translation of similar corpuses. Therefore, a translation error might be caused at this time.

In this context, and in conjunction with the technical problem that the training process of the conventional machine translation model in the target field is time-consuming and laborious and exhibits a low efficiency as stated in Background of the Disclosure, the present embodiment provides a solution of training a machine translation model in a target field.

In the present embodiment, the first training sample set and second training sample set whose translation quality satisfies a preset requirement ae screened from the parallel corpuses, wherein the translation quality of the samples in the first training sample set satisfies the preset requirement and the samples have the universal-field features and/or target-field features. That is to say, the samples in the first training sample set have sufficiently high translation quality as well as universal-field or target-field features, and obviously belong to samples in the universal field or samples in the target field.

The samples in the second training sample set have the translation quality satisfying the preset requirement, and do not have the universal-field features or target-field features. That is to say, the translation quality of the samples in the second training sample set also satisfies the preset requirement and is sufficiently high, but do not have obvious universal-field and target-field properties, i.e., the samples do not carry obvious field classification information.

The number of the set of samples included in the first training sample set and the set of samples included in the second training sample set may be one, two or more. Specifically, it is possible to set N samples according to actual needs as a batch, to constitute a corresponding training sample set, which will not be limited herein.

In the present embodiment, first, the first training sample set is used to train the encoder in the machine translation model in the target field and the discriminator configured in the encoding layers of the encoder, aiming to enabling the encoder in the machine translation model in the target field to, through adversarial learning, to indicate that field-related features are learnt in a shallow layer on the one hand, and learn field-irrelevant features at upper-layer features on the other hand; specifically, this is achieved by allowing a bottom-layer discriminator to generate an accurate discrimination result, and an upper-layer discriminator to generate an inaccurate discrimination result. The bottom-layer discriminator refers to a discriminator connected to a bottom-layer encoding layer, and the bottom-layer encoding layer refers to an encoding layer adjacent to the input layer. The upper-layer discriminator refers to a discriminator connected to the upper-layer encoding layer, and the upper-layer encoding layer refers to an encoding layer adjacent to the decoding layer.

Then, the second training sample set is used to train the encoder and decoder in the machine translation model in the target field. The samples in the second training sample set have the following features:

A) The translation result using the current machine translation model in the target field is better, i.e., the translation probability of the machine translation model in the target field is larger than a preset translation probability threshold, e.g.,

$$p(y|x; \theta_{enc}, \theta_{dec}) > T_{NMT}$$

where $p(y|x; \theta_{enc}, \theta_{dec})$ represents the probability that the machine translation model in the target field translates the source sentence x in the sample into y, where $\theta_{enc}$ represents parameters of the encoder of the machine translation model in the target field, and $\theta_{dec}$ represents parameters of the decoder of the machine translation model in the target field.

B) The discriminator cannot accurately judge which field the sample belongs to, namely,

$$p(cls = 1|x; \theta_{enc}, \theta_{dis}) \approx 0.5$$

where $p(cls = 1|x; \theta_{enc}, \theta_{dis})$ represents the probability that the discriminator recognizes the field to which the source sentence x in the sample belongs, and $\theta_{dis}$ represents parameters of the discriminator.

During the training, samples which have good translation results and whose fields are difficult to distinguish are selected to train the translation model in the target field, so that the translation model may be better adjusted to adapt to the distribution of the target field.

During the training in the present embodiment, the above steps S101-S103 may be performed repeatedly until preset training times are reached, or until a loss function of the whole model structure converges.

As known from the above, during the training of the machine translation model in the target field in the present embodiment, it is not to individually train the machine translation model in the target field, but to purposefully train the machine translation model in the target field by referring to the field of the sample by disposing a discriminator for discriminating the field to which the sample belongs, in each layer of the encoder of the machine translation model in the target field, so that the machine translation model in the target field may be better adjusted to adapt to the distribution of the target field and improve the accuracy of the machine translation model in the target field.

According to the method for training the machine translation model in the target field in the present embodiment, a set of samples whose translation quality satisfies a preset requirement and which have universal-field features and/or target-field features are selected from parallel corpuses to constitute the first training sample set; a set of samples whose translation quality satisfies a preset requirement and which do not have universal-field features and target-field features are selected from the parallel corpuses to constitute the second training sample set; the encoder in the machine translation model in the target field, the discriminator configured in encoding layers of the encoder, and the encoder and the decoder in the machine translation model in the target field are trained in turn with the first training sample set and second training sample set, respectively, the discriminator being used to recognize fields to which input samples during training belong. As compared with the method for training the machine translation model in the target field in the prior art, the method for training the machine translation model in the target field in the present embodiment is time-saving and effort-saving, and may effectively improve the training efficiency of the machine translation model in the target field. Furthermore, it is possible, with the training method of the present embodiment, to adaptively adjust the training of the machine translation model in the target field by referring to the distribution of the samples in the target field and the universal field, thereby effectively improving the accuracy of the machine translation model in the target field.

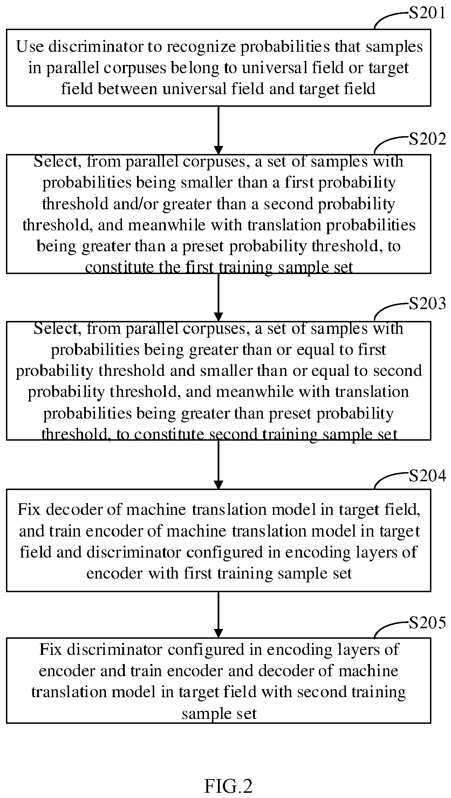

FIG. 2 illustrates a schematic diagram of a second embodiment according to the present disclosure. As shown in FIG. 2, the technical solution of the method for training the machine translation model in the target field according to the present embodiment will be further introduced in more detail on the basis of the above technical solution of the embodiment shown in FIG. 1. As shown in FIG. 2, the method for training the machine translation model in the target field according to the present embodiment may specifically include the following steps:

S201: Using the discriminator to recognize probabilities that samples in the parallel corpuses belong to the universal field or target field between the universal field and target field;

S202: Selecting, from the parallel corpuses, a set of samples with the probabilities being smaller than a first probability threshold and/or greater than a second probability threshold, and meanwhile with translation probabilities being greater than a preset probability threshold, to constitute the first training sample set;

The above step S201 and step S202 are a specific implementation of step S101 of the embodiment shown in FIG. 1. In the present embodiment, the discriminator is used to recognize the probabilities that the samples belong to the universal field or target field, to recognize that the samples have features in the universal field or features in the target field. For example, in the present embodiment, the discriminator may be used to uniformly recognize the probabilities that the samples belong to the universal field between the target field and the universal field. If the probabilities that the samples belong to the universal field are higher, the samples belong to the universal field; if the probabilities that the samples belong to the universal field are lower, the samples belong to the target field.

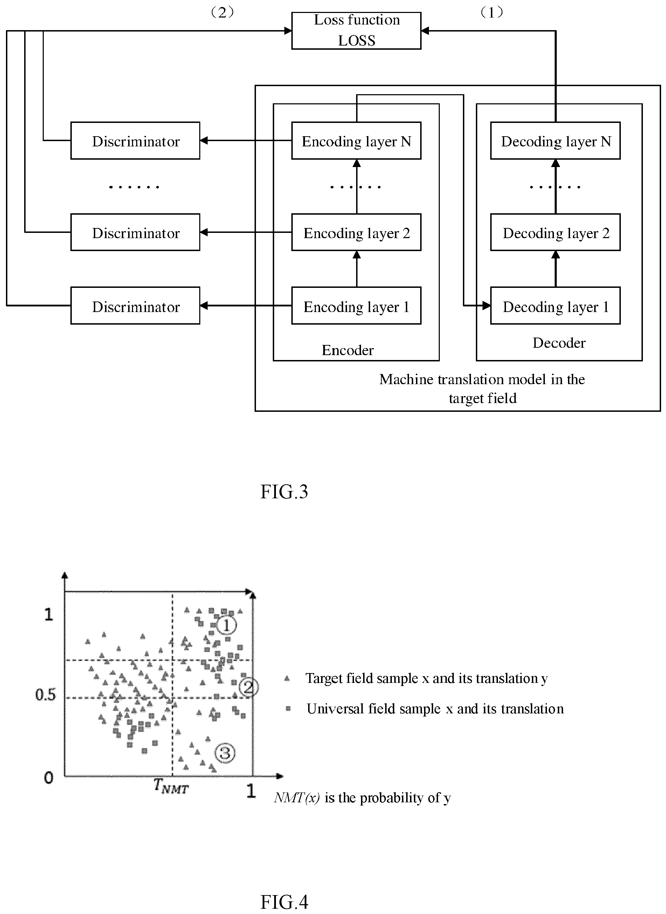

FIG. 3 illustrates a training architecture diagram of a machine translation model in a target field according to the present embodiment. As shown in FIG. 3, the machine translation model in the target field in the present embodiment comprises two portions, namely, an encoder and a decoder. The encoder comprises an encoding layer 1, an encoding layer 2, ..., and an encoding layer N; the decoder comprises a decoding layer 1, a decoding layer 2, ..., and a decoding layer N. The number of N may be any positive integer larger than 2, and specifically set according to actual needs. In the present embodiment, to improve the accuracy of the machine translation model in the target field, each encoding layer in the present embodiment is configured with a discriminator for discriminating the probabilities that the samples belong to a field, e.g., to the universal field.

It needs to be appreciated that in the present embodiment, the machine translation model in the target field to be trained may be a machine translation model in the universal field pre-trained based on a deep learning technology, i.e., before training, the machine translation model in the universal field pre-trained based on the deep learning technology is obtained first as the machine translation model in the target field.

For example, in the present embodiment, since a deep layer of the encoder has a stronger semantic expression capability than a shallow layer, the discriminator configured in the topmost encoding layer of the encoder of the machine translation model in the target field is preferably employed to recognize the probabilities that the samples of the parallel corpuses belong to the universal field or target field. Likewise, in the present embodiment, the probabilities that the samples belong to the universal field may be uniformly used to represent.

The second probability threshold is larger than the first probability threshold in the present embodiment. Specific values of the first probability threshold and second probability threshold may be set according to actual needs. For example, in the present embodiment, samples with the probabilities greater than the second probability threshold are all considered as samples that belong to the universal field, whereas samples with the probabilities smaller than the first probability threshold are all considered as samples that belong to the target field. FIG. 4 illustrates a schematic diagram showing sample probability distribution in the present embodiment. As shown in FIG. 4, the translation probability of the sample is taken as the horizontal coordinate, and the longitudinal coordinate is the probability discriminated by the discriminator that the sample belongs to the universal field. The translation probability represents the probability that source sentence x in the sample is translated into the target sentence y and may be represented as a probability that NMT (x) is y. As shown in FIG. 4, the "△" shapes in the figure represent the samples in the target field, whereas the "0" shapes represent the samples in the universal field. In the parallel corpuses, samples with better translation effects may be selected, i.e., the translation probability should be greater than a translation probability threshold $T_{NMT}$. The magnitude of the translation probability threshold may be set according to actual needs, e.g., 0.7, 0.8 or other values greater than 0.5 and smaller than 1. Then, in the samples whose translation probabilities are greater than the translation probability threshold $T_{NMT}$, the probabilities belonging to the universal field are then divided into three regions. The topmost transverse dotted line in FIG. 3 is a boundary line of the second probability threshold, and the lower transverse dotted line is a boundary line of the first probability threshold. In FIG. 4, 0.5 is taken as an example of the first probability threshold. Other values may also be set in practical application. The second probability threshold is greater than the first probability threshold, for example, 0.7, 0.8 or other values greater than 0.5 and smaller than 1. As such, as shown in FIG. 4, the samples with the translation probabilities greater than the preset probability threshold may be divided into three regions. The ○,1 region as shown in FIG. 4 is a region of samples in the universal field, and includes many samples in the universal field. The 0,3 region is a region of samples in the target field, and include many samples in the target field. The universal field and target field cannot be clearly distinguished in the 0,2 region, and the 0,2 region includes many samples in the universal field as well as many samples in the target field. As stated in the above step S202, a set of samples are selected from the ○,1 region and/or the 0,3 region to constitute the first training sample set.

S203: Selecting, from the parallel corpuses, a set of samples with the probabilities being greater than or equal to the first probability threshold and smaller than or equal to the second probability threshold, and meanwhile with translation probabilities being greater than a preset probability threshold, to constitute the second training sample set;

Likewise, it may be known from the illustration of FIG. 4 that in step S203, a set of samples are selected from the 0,2 region to constitute the second training sample set.

S204: Fixing the decoder of the machine translation model in the target field, and training the encoder of the machine translation model in the target field and the discriminator configured in encoding layers of the encoder with the first training sample set;

In the present embodiment, the first training sample set is first employed to train the encoder of the machine translation model in the target field and the discriminator configured in encoding layers of the encoder as shown in FIG. 3. At this time, correspondingly, the decoder of the machine translation model in the target field as shown in FIG. 3 is fixed, namely, the parameters of the decoder are fixed without participating in the adjustment during training.

The purposes of the training are: a) a bottom-layer encoder can learn special features in some fields, for example, special modal particles, expression methods etc. in the colloquial language; b) the high-layer encoder can learn universal words and sentence expressions and master the meaning of the whole sentence without paying attention to details of fields. In the present embodiment, the bottom-layer encoder is an encoder close to the input layer, and the high-layer encoder is an encoder close to the decoder.

The samples in the first training sample set have high scores in the machine translation model in the universal field and have a high confidence for the field to which the samples belong to. Through the training, the high-level encoder may be encoded to learn a representation in the universal field, rather than a special representation in the target field, i.e., it is not desirable to obtain samples having a high-confidence judgment for the field to which they belong, namely, samples to be optimized here. Hence, in this step, training is performed with the first training sample set constituted by a set of samples having universal-field features and/or target field features.

It needs to be appreciated that in the present embodiment, the discriminator is connected to each encoder layer to discriminate the class of the field, and each encoder layer learns features having a field-discriminating capability, i.e., special features unique to the field. This meets the requirement in the above purpose a) but fails to satisfy the requirement in the above purpose b), i.e., the high-layer encoder learns a universal sentence representation. Regarding this issue, field-irrelevant universal features may be learned by a negative gradient backpropagation method. For example, reference may be made to knowledge related to domain-adversarial training of neural networks for the negative gradient backpropagation method, and detailed depictions will not be provided any more here.

S205: Fixing the discriminator configured in the encoding layers of the encoder and training the encoder and decoder of the machine translation model in the target field with the second training sample set.

When the encoder and decoder of the machine translation model in the target field are trained with the second training sample set, the samples in the second training sample set are samples not having universal-field features and target-field features. Such a portion of samples have a very good translation effect, but it is difficult to distinguish whether the samples belong to the universal field or target field. Such a portion of samples are used to train the machine translation model so that the machine translation model may be better adjusted to adapt to the distribution of the target field.

Through the training in the above two steps S204 and S205, the model may gradually achieve the following: the bottom-layer encoder can learn special features in some fields, such as special modal particles, expression methods etc. in the colloquial language; the high-layer encoder can learn universal words and sentence expressions and master the meaning of the whole sentence without paying attention to details of fields. Furthermore, the distribution of the encoder and decoder structures of the machine translation model in the target field is gradually adjusted to enhance the translation accuracy of the target field.

As shown in FIG. 3, during training in step S204, the loss function of the entire model comprises two portions: translation loss (1) and discrimination loss (2). The two losses are superimposed as a total loss function. During training of the model, the parameters are adjusted in the direction of the convergence of the total loss function by a gradient descent method. That is, in the training in each step, the parameters of the encoder of the machine translation model in the target field and the discriminator configured in each encoding layer of the encoder are adjusted to cause the loss function to descend in the direction of convergence.

Likewise, regarding the step S205, during the training of the model, the parameters are also adjusted in the direction of convergence of the total loss function by the gradient descent method. That is, in the training in each step, the parameters of the encoder and decoder of the machine translation model in the target field are adjusted to cause the loss function to descend in the direction of the convergence.

During the training in the present embodiment, the above step S201-S205 may be iteratively performed, until the total loss function converges and the training ends, whereupon the parameters of the discriminator and the parameters of the encoder and decoder of the machine translation model in the target field are determined, and then the discriminator and the machine translation model in the target field are determined. However, in the translation in the target field, only the machine translation model in the target field constituted by the encoder and decoder of the duly trained machine translation model in the target field is used to implement the translation in the target field. As stated in the above embodiment, the target field in the present embodiment may be a colloquial field or other special fields. The machine translation models in corresponding target fields may be specifically trained in the training manner of the present embodiment.

According to the above technical solution of the method of training the machine translation model in the target field in the present embodiment, the field features of the samples may be distinguished using the probabilities that the samples belong to a field discriminated by the discriminator, so that the first training sample set and second training sample set may be obtained accurately; the decoder of the machine translation model in the target field is fixed, and the encoder of the machine translation model in the target field and the discriminator configured in encoding layers of the encoder are trained with the first training sample set; the discriminators configured in the encoding layers of the encoder are fixed, and the encoder and decoder of the machine translation model in the target field are trained with the second training sample set. In the above manner, adaptive adjustment of the training of the machine translation model in the target field is achieved, and the accuracy of the machine translation model in the target field can be improved effectively. As compared with the method for training the machine translation model in the target field in the prior art, the method for training the machine translation model in the target field in the present embodiment is time-saving and effort-saving, and may effectively improve the training efficiency of the machine translation model in the target field.

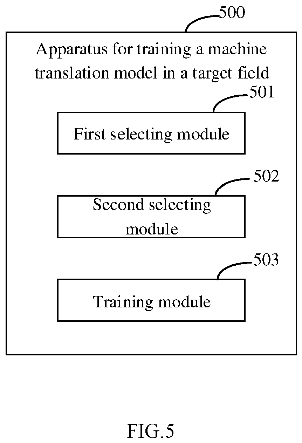

FIG. 5 illustrates a schematic diagram of a third embodiment according to the present disclosure. As shown in FIG. 5, the present embodiment provides an apparatus 500 for training a machine translation model in a target field, comprising:

a first selecting module 501 configured to select, from parallel corpuses, a set of samples whose translation quality satisfies a preset requirement and which have universal-field features and/or target-field features, to constitute a first training sample set;
a second selecting module 502 configured to select, from the parallel corpuses, a set of samples whose translation quality satisfies a preset requirement and which do not have universal-field features and target-field features, to constitute a second training sample set;
a training module 503 configured to train an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

Principles employed by the apparatus 500 for training the machine translation model in the target field in the present embodiment to implement the training of the machine translation model in the target field by using the above modules and the resultant technical effects are the same as those of the above relevant method embodiments. For particulars, please refer to the depictions of the aforesaid relevant method embodiments, and no detailed depictions will be presented here.

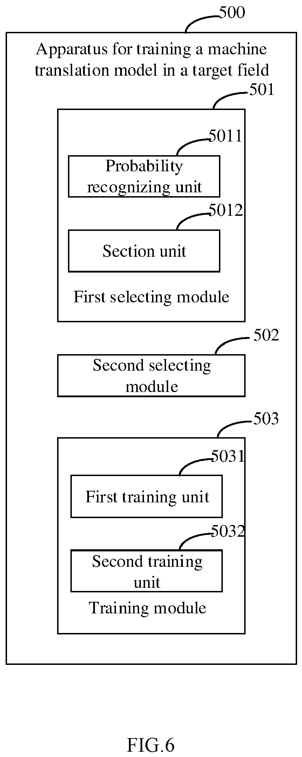

FIG. 6 illustrates a schematic diagram of a fourth embodiment according to the present disclosure. As shown in FIG. 4, the apparatus 300 for training the machine translation model in the target field of the present embodiment will be further described in more detail on the basis of the technical solution of the embodiment shown in FIG. 5.

As shown in FIG. 6, in the apparatus 500 for training the machine translation model in the target field of the present embodiment, the first selecting module 501 comprises:

a probability recognizing unit 5011 configured to use the discriminator to recognize probabilities that samples in the parallel corpuses belong to the universal field or target field between the universal field and target field;

a selection unit 5012 configured to select, from the parallel corpuses, a set of samples with the probabilities being smaller than a first probability threshold and/or greater than a second probability threshold, and meanwhile with translation probabilities being greater than a preset probability threshold, to constitute the first training sample set; wherein the second probability threshold is greater than the first probability threshold.

Further optionally, the second selecting module 502 is configured to:

select, from the parallel corpuses, a set of samples with the probabilities being greater than or equal to the first probability threshold and smaller than or equal to the second probability threshold, and meanwhile with translation probabilities being greater than a preset probability threshold, to constitute the second training sample set.

Further optionally, the probability recognizing unit 5011 is configured to:

use the discriminator configured in the topmost encoding layer of the encoder of the machine translation model in the target field to recognize the probabilities that the samples of the parallel corpuses belong to the universal field or target field.

Further optionally, as shown in FIG. 6, in the apparatus 500 for training the machine translation model in the target field in the present embodiment, the training module 503 comprises:

a first training unit 5031 configured to fix the decoder of the machine translation model in the target field, and train the encoder of the machine translation model in the target field and the discriminator configured in encoding layers of the encoder with the first training sample set;

a second training unit 5032 configured to fix the discriminator configured in the encoding layers of the encoder and train the encoder and decoder of the machine translation model in the target field with the second training sample set.

Further optionally, not shown in FIG. 6, the apparatus 500 for training the machine translation model in the target field in the present embodiment further comprises:

an obtaining module configured to obtain a machine translation model in the universal field pre-trained based on a deep learning technology, as the machine translation model in the target field.

Principles employed by the apparatus 500 for training the machine translation model in the target field in of the present embodiment to implement the training of the machine translation model in the target field by using the above modules and the resultant technical effects are the same as those of the above relevant method embodiments. For particulars, please refer to the depictions of the aforesaid relevant method embodiments, and no detailed depictions will be presented here.

According to embodiments of the present disclosure, the present disclosure further provides an electronic device and a readable storage medium.

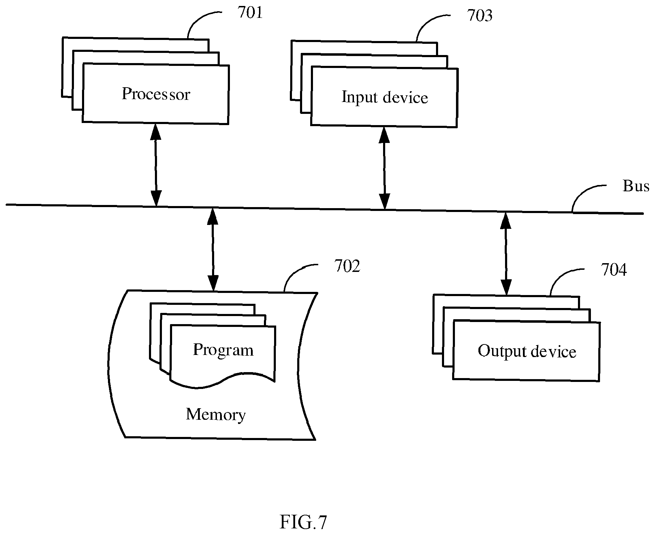

As shown in FIG. 7, it shows a block diagram of an electronic device for implementing the method for training the machine translation model in the target field according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 7, the electronic device comprises: one or more processors 701, a memory 702, and interfaces configured to connect components and including a high-speed interface and a low speed interface. Each of the components are interconnected using various busses, and may be mounted on a common motherboard or in other manners as appropriate. The processor can process instructions for execution within the electronic device, including instructions stored in or on the memory to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 701 is taken as an example in FIG. 7.

The memory 702 is a non-transitory computer-readable storage medium provided by the present disclosure. The memory stores instructions executable by at least one processor, so that the at least one processor executes the method for training the machine translation model in the target field according to the present disclosure. The non-transitory computer-readable storage medium of the present disclosure stores computer instructions, which are used to cause a computer to execute the method for training the machine translation model in the target field according to the present disclosure.

The memory 702 is a non-transitory computer-readable storage medium and can be used to store non-transitory software programs, non-transitory computer executable programs and modules, such as program instructions/modules (e.g., relevant modules shown in FIG. 5 through FIG. 6) corresponding to the method for training the machine translation model in the target field in embodiments of the present disclosure. The processor 701 executes various functional applications and data processing of the server, i.e., implements the method for training the machine translation model in the target field in the above method embodiments, by running the non-transitory software programs, instructions and modules stored in the memory 702.

The memory 702 may include a storage program region and a storage data region, wherein the storage program region may store an operating system and an application program needed by at least one function; the storage data region may store data created according to the use of the electronic device for implementing the method for training the machine translation model in the target field. In addition, the memory 702 may include a high-speed random access memory, and may also include a non-transitory memory, such as at least one magnetic disk storage device, a flash memory device, or other non-transitory solid-state storage device. In some embodiments, the memory 702 may optionally include a memory remotely arranged relative to the processor 701, and these remote memories may be connected to the electronic device for implementing the method for training the machine translation model in the target field through a network. Examples of the above network include, but are not limited to, the Internet, an intranet, a local area network, a mobile communication network, and combinations thereof.

The electronic device for implementing the method for training the machine translation model in the target field may further include an input device 703 and an output device 704. The processor 701, the memory 702, the input device 703 and the output device 704 may be connected through a bus or in other manners. In FIG.

7, the connection through the bus is taken as an example.

The input device 703 may receive inputted numeric or character information and generate key signal inputs related to user settings and function control of the electronic device for implementing the method for training the machine translation model in the target field, and may be an input device such as a touch screen, keypad, mouse, trackpad, touchpad, pointing stick, one or more mouse buttons, trackball and joystick. The output device 704 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a proxies component (e.g., an application server), or that includes a front end component (e.g., a client computer having a graphical user interface or a Web browser through which a user may interact with an implementation of the systems and techniques described here), or any combination of such back end, proxies, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

According to the technical solutions of the present disclosure, a set of samples whose translation quality satisfies a preset requirement and which have universal-field features and/or target-field features are selected from parallel corpuses to constitute the first training sample set; a set of samples whose translation quality satisfies a preset requirement and which do not have universal-field features and target-field features are selected from the parallel corpuses to constitute the second training sample set; the encoder in the machine translation model in the target field, the discriminator configured in encoding layers of the encoder, and the encoder and the decoder in the machine translation model in the target field are trained in turn with the first training sample set and second training sample set, respectively, the discriminator being used to recognize fields to which input samples during training belong. As compared with the method for training the machine translation model in the target field in the prior art, the method for training the machine translation model in the target field in the present embodiment is time-saving and effort-saving, and may effectively improve the training efficiency of the machine translation model in the target field. Furthermore, it is possible, with the training method of the present embodiment, to adaptively adjust the training of the machine translation model in the target field by referring to the distribution of the samples in the target field and the universal field, thereby effectively improving the accuracy of the machine translation model in the target field.

According to the above technical solutions of embodiments of the present disclosure, the field features of the samples may be distinguished using the probabilities that the samples belong to a field discriminated by the discriminator, so that the first training sample set and second training sample set may be obtained accurately; the decoder of the machine translation model in the target field is fixed, and the encoder of the machine translation model in the target field and the discriminator configured in encoding layers of the encoder are trained with the first training sample set; the discriminators configured in the encoding layers of the encoder are fixed, and the encoder and decoder of the machine translation model in the target field are trained with the second training sample set. In the above manner, adaptive adjustment of the training of the machine translation model in the target field is achieved, and the accuracy of the machine translation model in the target field can be improved effectively. As compared with the method for training the machine translation model in the target field in the prior art, the method for training the machine translation model in the target field in the present embodiment is time-saving and effort-saving, and may effectively improve the training efficiency of the machine translation model in the target field.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

**Claims**

1. A method for training a machine translation model in a target field, wherein the method comprises:

   selecting (S101), from parallel corpuses, a set of samples whose translation quality satisfies a preset requirement and which have universal-field features and/or target-field features, to constitute a first training sample set;
   selecting (S102), from the parallel corpuses, a set of samples whose translation quality satisfies a preset requirement and which do not have universal-field features and target-field features, to constitute a second training sample set;
   training (S103) an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

2. The method according to claim 1, wherein the selecting, from parallel corpuses, a set of samples whose translation quality satisfies a preset requirement and which have universal-field features and/or target-field features, to constitute a first training sample set comprises:

using (S201) the discriminator to recognize probabilities that samples in the parallel corpuses belong to the universal field or target field between the universal field and target field;
selecting (S202), from the parallel corpuses, a set of samples with the probabilities being smaller than a first probability threshold and/or greater than a second probability threshold, and meanwhile with translation probabilities being greater than a preset probability threshold, to constitute the first training sample set; wherein the second probability threshold is greater than the first probability threshold.

3. The method according to claim 2, wherein the selecting, from the parallel corpuses, a set of samples whose translation quality satisfies a preset requirement and which do not have universal-field features and target-field features, to constitute a second training sample set comprises:
selecting (S203), from the parallel corpuses, a set of samples with the probabilities being greater than or equal to the first probability threshold and smaller than or equal to the second probability threshold, and meanwhile with translation probabilities being greater than the preset probability threshold, to constitute the second training sample set.

4. The method according to claim 2, wherein the using the discriminator to recognize probabilities that samples in the parallel corpuses belong to the universal field or target field between the universal field and target field comprises:
using the discriminator configured in the topmost encoding layer of the encoder of the machine translation model in the target field to recognize the probabilities that the samples of the parallel corpuses belong to the universal field or target field.

5. The method according to claim 1, wherein the training an encoder in the machine translation model in the target field, a discriminator configured in encoding layers of the encoder, and the encoder and a decoder in the machine translation model in the target field in turn with the first training sample set and second training sample set, respectively comprises:

fixing (S204) the decoder of the machine translation model in the target field, and training the encoder of the machine translation model in the target field and the discriminator configured in encoding layers of the encoder with the first training sample set;
fixing (S205) the discriminator configured in the encoding layers of the encoder and training the encoder and decoder of the machine translation model in the target field with the second training sample set.

6. The method according to any of claims 1-5, wherein before training an encoder in the machine translation model in the target field, a discriminator configured in encoding layers of the encoder, and the encoder and a decoder in the machine translation model in the target field in turn with the first training sample set and second training sample set, respectively, the method comprises:
obtaining a machine translation model in the universal field pre-trained based on a deep learning technology, as the machine translation model in the target field.

7. An apparatus (500) for training a machine translation model in a target field, wherein the apparatus comprises:

a first selecting module (501) configured to select, from parallel corpuses, a set of samples whose translation quality satisfies a preset requirement and which have universal-field features and/or target-field features, to constitute a first training sample set;
a second selecting module (502) configured to select, from the parallel corpuses, a set of samples whose translation quality satisfies a preset requirement and which do not have universal-field features and target-field features, to constitute a second training sample set;
a training module (503) configured to train an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong.

8. The apparatus (500) according to claim 7, wherein the first selecting module (501) comprises:

a probability recognizing unit (5011) configured to use the discriminator to recognize probabilities that samples in the parallel corpuses belong to the universal field or target field between the universal field and target field;

a selection unit (5012) configured to select, from the parallel corpuses, a set of samples with the probabilities being smaller than a first probability threshold and/or greater than a second probability threshold, and meanwhile with translation probabilities being greater than a preset probability threshold, to constitute the first training sample set; wherein the second probability threshold is greater than the first probability threshold.

9. The apparatus (500) according to claim 8, wherein the second selecting module (502) is configured to select, from the parallel corpuses, a set of samples with the probabilities being greater than or equal to the first probability threshold and smaller than or equal to the second probability threshold, and meanwhile with translation probabilities being greater than the preset probability threshold, to constitute the second training sample set.

10. The apparatus (500) according to claim 8, wherein the probability recognizing unit (5011) is configured to

use the discriminator configured in the topmost encoding layer of the encoder of the machine translation model in the target field to recognize the probabilities that the samples of the parallel corpuses belong to the universal field or target field.

11. The apparatus (500) according to claim 7, wherein the training module (503) comprises:

a first training unit (5031) configured to fix the decoder of the machine translation model in the target field, and train the encoder of the machine translation model in the target field and the discriminator configured in encoding layers of the encoder with the first training sample set;
a second training unit (5032) configured to fix the discriminator configured in the encoding layers of the encoder and train the encoder and decoder of the machine translation model in the target field with the second training sample set.

12. The apparatus (500) according to any of claims 7-11, wherein the apparatus further comprises:
an obtaining module configured to obtain a machine translation model in the universal field pre-trained based on a deep learning technology, as the machine translation model in the target field.

13. An electronic device, wherein the electronic device comprises:

at least one processor; and

a memory communicatively connected with the at least one processor; wherein,
the memory stores instructions executable by the at least one processor, and the instructions are executed by the at least one processor to cause the at least one processor to implement the method according to any of claims 1-6.

14. A non-transitory computer-readable storage medium storing computer instructions therein, wherein the computer instructions are used to cause the computer to implement the method according to any of claims 1-6.

15. A computer program product comprising instructions which, when the program is executed by a computer, cause the computer to implement the method according to any of claims 1-6.

Select, from parallel corpuses, a set of samples whose translation quality satisfies a preset requirement and which have universal-field features and/or target-field features, to constitute a first training sample set — S101

Select, from the parallel corpuses, a set of samples whose translation quality satisfies a preset requirement and which do not have universal-field features and target-field features, to constitute a second training sample set — S102

Train an encoder in the machine translation model in the target field, a discriminator configured in encoding layers of the encoder, and the encoder and a decoder in the machine translation model in the target field in turn with the first training sample set and second training sample set, respectively; the discriminator being used to recognize fields to which input samples during training belong — S103

FIG.1

S201

Use discriminator to recognize probabilities that samples in parallel corpuses belong to universal field or target field between universal field and target field

S202

Select, from parallel corpuses, a set of samples with probabilities being smaller than a first probability threshold and/or greater than a second probability threshold, and meanwhile with translation probabilities being greater than a preset probability threshold, to constitute the first training sample set

S203

Select, from parallel corpuses, a set of samples with probabilities being greater than or equal to first probability threshold and smaller than or equal to second probability threshold, and meanwhile with translation probabilities being greater than preset probability threshold, to constitute second training sample set

S204

Fix decoder of machine translation model in target field, and train encoder of machine translation model in target field and discriminator configured in encoding layers of encoder with first training sample set

S205

Fix discriminator configured in encoding layers of encoder and train encoder and decoder of machine translation model in target field with second training sample set

FIG.2

（2）           Loss function        （1）

LOSS

Discriminator   ←  Encoding layer N     Decoding layer N

· · · · · ·      · · · · · ·      · · · · · ·

Discriminator   ←  Encoding layer 2     Decoding layer 2

Discriminator   ←  Encoding layer 1     Decoding layer 1

Encoder         Decoder

Machine translation model in the
target field

FIG.3

FIG.4

▲ Target field sample x and its translation y

▪ Universal field sample x and its translation

$NMT(x)$ is the probability of y

$T_{NMT}$

500

Apparatus for training a machine
translation model in a target field

501

First selecting module

502

Second selecting
module

503

Training module

FIG.5

~500

Apparatus for training a machine
translation model in a target field

~501

~5011

Probability
recognizing unit

~5012

Section unit

First selecting module

~502

Second selecting
module

~503

~5031

First training unit

~5032

Second training
unit

Training module

FIG.6

701

Processor

703

Input device

Bus

702

Program

Memory

704

Output device

FIG.7

Europäisches
Patentamt

European
Patent Office

Office européen
des brevets

**EUROPEAN SEARCH REPORT**

Application Number

EP 21 16 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZENG JIALI ET AL: "Multi-Domain Neural Machine Translation with Word-Level Domain Context Discrimination", PROCEEDINGS OF THE 2018 CONFERENCE ON EMPIRICAL METHODS IN NATURAL LANGUAGE PROCESSING, [Online] 2018, pages 447-457, XP055837092, Stroudsburg, PA, USA DOI: 10.18653/v1/D18-1041 Retrieved from the Internet: URL:https://aclanthology.org/D18-1041.pdf> [retrieved on 2021-09-01] * abstract * * section 2, figure 2 * * section 3.1 * ----- | 1-15 | INV. G06F40/45 G06F40/44 |
| A | CHU CHENHUI ET AL: "An Empirical Comparison of Domain Adaptation Methods for Neural Machine Translation", PROCEEDINGS OF THE 55TH ANNUAL MEETING OF THE ASSOCIATION FOR COMPUTATIONAL LINGUISTICS (VOLUME 2: SHORT PAPERS), [Online] 2017, pages 385-391, XP055837526, Stroudsburg, PA, USA DOI: 10.18653/v1/P17-2061 Retrieved from the Internet: URL:https://aclanthology.org/P17-2061.pdf> [retrieved on 2021-09-03] * abstract * * section 3.3 * ----- -/-- | 1,7, 13-15 | TECHNICAL FIELDS SEARCHED (IPC) G06F |

The present search report has been drawn up for all claims

| Place of search | Date of completion of the search | Examiner |
|---|---|---|
| Berlin | 3 September 2021 | Stauch, Marc |

EPO FORM 1503 03.82 (P04C01)

page 1 of 3

Europäisches
Patentamt

European
Patent Office

Office européen
des brevets

## EUROPEAN SEARCH REPORT

Application Number

EP 21 16 3862

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Reid Pryzant ET AL: "Effective Domain Mixing for Neural Machine Translation", Research Papers, 7 September 2017 (2017-09-07), pages 118-126, XP055603348, Retrieved from the Internet: URL:https://aclweb.org/anthology/W17-4712 [retrieved on 2019-07-08] * abstract * * section 3 * | 1-15 | |
| X | SHUHAO GU ET AL: "Improving Domain Adaptation Translation with Domain Invariant and Specific Information", ARXIV.ORG, CORNELL UNIVERSITY LIBRARY, 201 OLIN LIBRARY CORNELL UNIVERSITY ITHACA, NY 14853, 8 April 2019 (2019-04-08), XP081492512, * abstract * * section 3 * * section 4 * | 1-15 | |
| A | CHENHUI CHU ET AL: "A Survey of Domain Adaptation for Neural Machine Translation", ARXIV.ORG, CORNELL UNIVERSITY LIBRARY, 201 OLIN LIBRARY CORNELL UNIVERSITY ITHACA, NY 14853, June 2018 (2018-06), XP080886045, * abstract * * section 4.1.3 * | 1,7, 13-15 | |

TECHNICAL FIELDS SEARCHED (IPC)

-/--

The present search report has been drawn up for all claims

| Place of search | Date of completion of the search | Examiner |
|---|---|---|
| Berlin | 3 September 2021 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 16 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HASSAN SAJJAD ET AL: "Neural Machine Translation Training in a Multi-Domain Scenario", ARXIV.ORG, CORNELL UNIVERSITY LIBRARY, 201 OLIN LIBRARY CORNELL UNIVERSITY ITHACA, NY 14853, 29 August 2017 (2017-08-29), XP081423805, * abstract * * section 2.2 * * section 2.3 * * section 4.2 * * section 4.3 * * section 4.5 * ----- | 1,7, 13-15 | |

TECHNICAL FIELDS
SEARCHED (IPC)

The present search report has been drawn up for all claims

| Place of search | Date of completion of the search | Examiner |
|---|---|---|
| Berlin | 3 September 2021 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)